# EUROPEAN PATENT SPECIFICATION

(11) **EP 3 245 913 B1**
(45) Date of publication and mention of the grant of the patent: **14.06.2023**
(21) Application number: 16737109.5
(22) Date of filing: 11.01.2016
(51) Int. Cl.: A47J 27/00, A47J 36/02, A45D 26/00, B65D 25/28

(54) **PAN FOR DEPILATORY WAX**
PFANNE FÜR ENTHAARUNGSWACHS
RÉCIPIENT POUR CIRE DÉPILATOIRE

(30) Priority: 13.01.2015 ES 201530025 U
(43) Date of publication of application: 22.11.2017
(73) Proprietor: Portillo de la Torre, David, 08031 Barcelona (ES)
(72) Inventor: Portillo de la Torre, David, 08031 Barcelona (ES)
(74) Representative: Espiell Volart, Eduardo Maria
(86) International application number: PCT/ES2016/070005
(87) International publication number: WO 2016/113449

(56) References cited:
- EP-A1- 2 431 345
- EP-A1- 2 431 345
- WO-A1-2006/057013
- WO-A1-2006/057013
- JP-A- 2009 195 276
- US-A- 1 877 009
- US-A1- 2006 005 373
- US-A1- 2012 037 639
- US-A1- 2012 037 639
- DATABASE WPI Derwent Publications Ltd., London, GB; & JP 2009 195276 A (SUMITOMO ELEC FINE POLYMER INC) 03 September 2009
- DATABASE WPI Derwent Publications Ltd., London, GB; & JP 2009 082356 A (TEIRIN KOFUN YUGENKOSHI) 23 April 2009
- DATABASE WPI Derwent Publications Ltd., London, GB; & JP 2005 261648 A (OSAKA MEASURING INSTR MFG) 29 September 2005

## Description

### OBJECT OF THE INVENTION

The invention, as stated in the title of the present specification, relates to a combination of a pan having a container for depilatory wax, and depilatory wax filled in the container, which provides several advantages and innovative characteristics inherent to the particular configuration thereof, which are described in detail below and which amount to a novelty in the current state of the art.

The object of the present invention is specifically focused on a pan which contains depilatory wax and can be heated in order to achieve the necessary degree of fluidity for the application thereof, and has the particular feature of being a container manufactured with aluminium that allows the use thereof with any electric, gas or glass ceramic stove, as well as with a microwave oven, in order to heat the aforementioned wax contained therein. Furthermore, the pan has a handle that is also made of aluminium for use both on the stove and in a microwave oven and which is preferably coated with a protective layer of silicone or Bakelite.

### FIELD OF APPLICATION OF THE INVENTION

The field of application of the present invention falls within the sector of the industry, which manufactures household utensils, specifically focusing on the field of accessories for hot depilatory wax.

### BACKGROUND OF THE INVENTION

The technical problem of existing pans for hot depilatory wax is that they can either only be used on electric, gas or glass ceramic stoves, due to the fact that the material they are made of is steel or stainless steel and therefore resistant to high temperatures and to the heat of the flames or the heat in general of said type of stoves, or they can only be used in microwave ovens because the material of which they are made is a plastic that is only suitable for this type of ovens.

However, existing pans for hot depilatory wax on the market can not be used interchangeably in both types of heating systems, in other words, on the one hand on electric, gas or glass ceramic stoves and, on the other, in microwave ovens, given that, as is known, plastic materials normally used in microwave ovens do not withstand the high temperatures of a stove, and metal materials, such as stainless steel, are not suitable for use in microwave ovens.

it would therefore be desirable to have specific pans for said application of heating wax which can be used on different types of existing stoves, with the exception of induction stoves which require materials with different magnetic properties, and which, in addition, can be used in microwave ovens, the main objective of the present invention being to develop a pan incorporating said advantages.

Several cooking pans are known from WO2006057013, EP2431345, US2012037639 and JP2009195276 whose contents may be heated through the stated methods. However, it is not known to use such pans with depilatory wax.

On the other hand, it is also worth mentioning that the applicant has no knowledge of the existence of any other pan for heating depilatory wax or of a similar invention having the same technical, structural and constituent characteristics thereof.

### DESCRIPTION OF THE INVENTION

Thus, the use for depilatory wax ot those pans, as proposed by the invention constitutes a remarkable novelty within its field of application, the characterizing details that make it possible being conveniently established in the final claims, which accompany the present specification.

Specifically, the pan proposed by the invention conventionally comprises a container, normally circular, and, always having dimensions that are considerably reduced when compared to a pan for cooking food, to which a handle is attached in order to facilitate the handling thereof.

According to an essential characteristic of the invention, said container is manufactured with aluminium, that is suitable for heating on an electric, gas or glass ceramic stove, and therefore, suitable for withstanding direct contact with flames, incandescent resistance and glass ceramic surfaces that reach high temperatures, at the same time being a material suitable for use in a microwave oven and, therefore, suitable for allowing the electromagnetic waves of said type of oven to pass through the same without absorbing energy. Thus, the wax contained in the container is heated without said container or apparatus being affected.

Aluminum, contrary to what people used to think, especially with regard to current microwave ovens, is a material that, in spite of the fact that it is a metal, is suitable for use in said type of ovens.

In fact, some noteworthy characteristics of aluminum, and the use thereof in microwave ovens, are that it conducts heat more efficiently; it is versatile and lightweight, hygienic, more affordable than other materials and 100% recyclable. Moreover, it is also more effective than traditional materials.

Studies have shown that aluminum can be used in microwave ovens without any risk to the oven or the user, as long as the usual instructions for the use of these devices are complied with.

In keeping with the characteristics of the pan of the invention, it is also worth noting that the handle, which can even be collapsible or foldable, is also made of aluminium

Furthermore, in a preferred embodiment of the invention, the handle, which can even be collapsible or foldable, is coated with an insulating and protective layer, preferably silicone or Bakelite, so that the user can grasp and handle the pan without burning themselves when the pan is hot.

The described pan for heating depilatory wax therefore consists of an innovative structure with structural and constituent characteristics heretofore unknown for its intended purpose, reasons which, together with its practical usefulness, provide it with sufficient grounds for obtaining the requested exclusivity privilege.

### DESCRIPTION OF THE DRAWINGS

To complement the present description, and for the purpose of helping to make the characteristics of the invention more readily understandable, the present specification is accompanied by one drawing, constituting an integral part of the same, which by way of illustration and not limitation represents the following:
Figure number 1, the only figure, shows a perspective view of an exemplary embodiment of the pan, object of the invention, with the handle provided with an insulating and protective layer, preferably of silicone or Bakelite.

### PREFERRED EMBODIMENT OF THE INVENTION

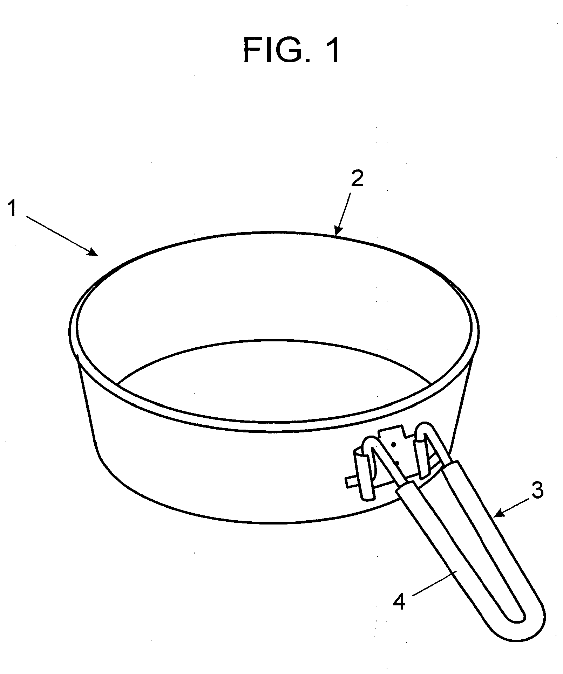

In light of said single Figure 1, and according to the adopted numbering, a preferred but non-limiting embodiment of the pan for depilatory wax of the invention can be seen, which comprises the parts and elements indicated and described in detail below.

Thus, as seen in said Figure 1, the pan (1) in question, applicable for heating depilatory wax either on as electric, gas, or glass ceramic stove, or in a microwave oven, is made up of container (2) with a fixed handle (3), optionally collapsible or foldable, said container (2) being made of aluminium, which is suitable for use in direct contact with flames, incandescent resistance and glass ceramic surfaces that reach high temperatures, as well as for allowing electromagnetic waves of a microwave oven to pass through the same without absorbing energy.

In turn, the handle (3), fixed, collapsible or foldable, is also made of aluminium, which is suitable for withstanding direct contact with flames, incandescent resistance and glass ceramic surfaces that reach high temperatures, as well as the electromagnetic waves of microwave ovens that pass through the same without absorbing energy.

Additionally, the handle (3) is coated with a layer (4) of insulating and protective material, preferably silicone or Bakelite.

## Claims

1. A combination of a pan (1) and depilatory wax, wherein the pan comprises a container (2) and a handle (3) and the wax is filled in the container, wherein said container (2) and handle (3) are made of aluminium, such that the pan (1) is suitable for heating the depilatory wax contained in the container (2) both on an electric, gas or glass ceramic stove, as well as in a microwave oven.

2. The combination according to claim 1, wherein the handle (3) is fixed, collapsible or foldable on the container (2).

3. The combination according to any of claims 1-2, wherein the handle (3) is coated with a layer (4) of Silicone.

## Patentansprüche

1. Kombination aus einem Topf (1) und Enthaarungswachs, wobei der Topf einen Behälter (2) und einen Griff (3) umfasst und das Wachs in den Behälter gefüllt wird, wobei
der Behälter (2) und der Griff (3) aus Aluminium hergestellt sind, sodass der Topf (1) zum Erhitzen des in dem Behälter (2) enthaltenen Enthaarungswachses sowohl auf einem Elektro-, Gas- oder Glaskeramikherd als auch in einem Mikrowellenofen geeignet ist.

2. Kombination nach Anspruch 1, wobei der Griff (3) am Behälter (2) befestigt, klappbar oder zusammenlegbar ist.

3. Kombination nach einem der Ansprüche 1-2, wobei der Griff (3) mit einer Schicht (4) aus Silikon beschichtet ist.

## Revendications

1. Combinaison d'une poêle (1) et de cire à épiler, dans laquelle la poêle comprend un récipient (2) et un manche (3) et la cire est remplie dans le récipient, dans laquelle
ledit récipient (2) et ledit manche (3) sont en aluminium, de sorte que la poêle (1) est adaptée pour chauffer la cire à épiler contenue dans le récipient (2) à la fois sur une cuisinière électrique, à gaz ou vitrocéramique, ainsi qu'au four à micro-ondes.

2. Combinaison selon la revendication 1, dans laquelle le manche (3) est fixe, pliable ou repliable sur le récipient (2).

3. Combinaison selon l'une quelconque des revendications 1 à 2, dans laquelle le manche (3) est recouvert d'une couche (4) de silicone.
